(19) Europäisches Patentamt
European Patent Office
Office européen des brevets

(11) **EP 4 734 005 A1**

(12) **EUROPEAN PATENT APPLICATION**

(43) Date of publication:
**29.04.2026 Bulletin 2026/18**

(21) Application number: **25210937.6**

(22) Date of filing: **24.10.2025**

(51) International Patent Classification (IPC):
***G06N 5/01*** *(2023.01)*

(52) Cooperative Patent Classification (CPC):
**G06N 5/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.10.2024 JP 2024189345**

(71) Applicant: **FUJITSU LIMITED**
**Kawasaki-shi, Kanagawa 211-8588 (JP)**

(72) Inventor: **UEMURA, Kento**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DISPLAY PROGRAM, DISPLAY METHOD, AND INFORMATION PROCESSING APPARATUS**

(57) A display program causes a computer (1) to execute a process including based on a first dataset, generating (S13) a second dataset that is virtual and has a causal relationship between variables included in the first dataset, in accordance with an estimation result indicating the causal relationship, calculating (S14) reliability of each inter-variable relationship between a first variable serving as a cause in the causal relationship and a second variable serving as an effect in the causal relationship, based on difference between the first dataset and the second dataset and displaying (S16) the calculated reliability of each inter-variable relationship.

FIG.4

## Description

FIELD

The embodiments discussed herein are related to a display program, a display method, and an information processing apparatus.

BACKGROUND

In recent years, "causal discovery" to estimate "causal relationship" between things or phenomena from a collected dataset has attracted much attention. Here, "causality" indicates a relationship of change between variables in the dataset. For example, as for variables X and Y, when the value of variable Y changes with a change in the value of variable X, there is a causal relationship X→Y between variable X as a cause and variable Y as an effect. Thus, the causal relationship can be said to be a data generation process because the cause (variable X) generates the effect (variable Y).

Note that, in the causal relationship X→Y, when the value of variable Y is changed, the value of variable X does not change. For example, there is a causal relationship R→U between an amount of precipitation (variable R) and the percentage of persons putting up their umbrellas (variable U). Conversely, there is no causal relationship from variable U to variable R because increasing the percentage of persons putting up their umbrellas does not cause rain.

For such causal discovery for variables, there is a conventional technology that uses the linear non-Gaussian acyclic model (LiNGAM), which is one of models to express causal relationships. This causal discovery using LiNGAM is performed by making a model under the assumption that a causal relationship (= generation process) between variables included in a dataset as a discovery target is based on a linear equation, and then estimating parameters of the model by using the dataset. A causal graph (the flow of the causal relationship between variables (the generation process)) obtained by this causal discovery follows a directed acyclic graph (DAG). Since such estimation (causal discovery) causes incorrect estimation due to degradation of accuracy, there is a conventional technology to evaluate the reliability of an estimation result.

Patent Literature 1: Japanese Laid-open Patent Publication No. 2016-190619.

However, the above-mentioned conventional technology has a problem in that there are only two types of evaluation: based on the reliability of the estimation result, the entirety of a causal order (causal graph) obtained by causal discovery is reliable or is not reliable at all.

For example, in the causal discovery using LiNGAM, when causal relationships are estimated in order from upstream to downstream, processing to discover the next variable from a variable set from which the influence of an already-determined variable is removed is repeated, hence, more errors tend to accumulate on the downstream side to make the reliability lower. This causes more cases in which the entirety of the causal graph is unreliable. However, the cases in which the entirety of the causal graph is unreliable at all include some cases in which a portion on the upstream side of the causal graph having sufficient amount of data of the number of variables are reliable. With the conventional technology described above, it is difficult to identify such cases in which the causal graphs on the upstream side are reliable.

Accordingly, it is an object in one aspect of an embodiment of the present invention to provide a display program, a display method, and an information processing apparatus that are capable of more accurately evaluating the result of estimation performed by causal discovery.

SUMMARY

According to an aspect of an embodiment, a display program causes a computer (1) to execute a process including based on a first dataset, generating (S13) a second dataset that is virtual and has a causal relationship between variables included in the first dataset, in accordance with an estimation result indicating the causal relationship, calculating (S14) reliability of each inter-variable relationship between a first variable serving as a cause in the causal relationship and a second variable serving as an effect in the causal relationship, based on difference between the first dataset and the second dataset and displaying (S16) the calculated reliability of each inter-variable relationship.

BRIEF DESCRIPTION OF DRAWINGS

FIG. 1 is a diagram illustrating a causal graph example;
FIG. 2 is a diagram illustrating an example of causal graph estimation;
FIG. 3 is a diagram illustrating an example of presenting the reliability of an estimation result;
FIG. 4 is a block diagram illustrating a functional configuration example of an information processing apparatus according to an embodiment;
FIG. 5 is a flowchart illustrating an operation example of the information processing apparatus according to the embodiment;
FIG. 6 is a diagram illustrating a causal graph example;
FIG. 7A is a diagram illustrating an example of presenting the reliability of an estimation result;
FIG. 7B is a diagram illustrating an example of presenting the reliability of an estimation result;
FIG. 8 is a flowchart illustrating an operation example of the information processing apparatus according to the embodiment; and

FIG. 9 is a diagram illustrating a computer configuration example.

DESCRIPTION OF EMBODIMENTS

Preferred embodiments will be explained with reference to accompanying drawings. In the embodiments, constituents having the same function are denoted by the same reference numeral and duplicate explanations thereof are omitted. Note that the display program, the display method, and the information processing apparatus described in the following embodiments are merely examples and are not intended to limit the embodiments. In addition, the following embodiments may be used in combination as appropriate to the extent that the embodiments are not inconsistent.

Overview of Embodiment

First, the overview of an embodiment will be given. An information processing apparatus according to the embodiment performs causal discovery, based on a dataset as a target of causal relationship estimation, and estimates a causal graph that indicates the relationship of changes between variables included in the dataset. Next, the information processing apparatus according to the embodiment displays the causal relationship between variables, based on the estimated causal graph (estimation result), to present the casual relationship to a user.

As the information processing apparatus according to the embodiment, for example, a personal computer (PC) can be used. In addition, for example, weather data, economic indicator data, or behavioral logs collected via the Internet can be used as the dataset as the target of causal relationship estimation.

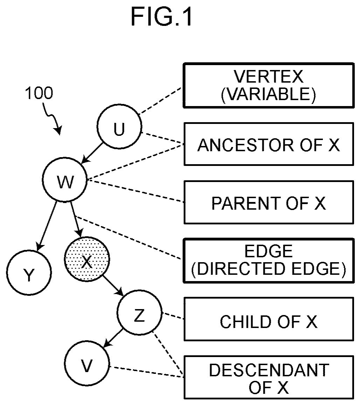

FIG. 1 is a diagram illustrating a causal graph example. The information processing apparatus according to the embodiment estimates a causal graph 100 illustrated in FIG. 1 by performing causal discovery, based on a dataset to be estimated.

The causal graph 100 is a directed acyclic graph that indicates a causal relationship (a generative relationship) between a variable as a cause and a variable as an effect for variables (U, V, W, X, Y, Z) included in the dataset to be estimated.

Specifically, in the causal graph 100 illustrated in FIG. 1, a causal relationship (cause and effect) from the most upstream vertex variable U to the most downstream variable V is illustrated by edges (directed edges). For example, with respect to variable X (shaded), variables U and W, which are causes of variable X, can be regarded as ancestors of variable X. Variable W, which is a direct cause of variable X, can be regarded as a parent of variable X. Variable Z, which is an effect of variable X serving as a direct cause of variable Z, can be regarded as a child of variable X. In addition, variables Z and V, which are downstream from variable X, can be regarded as descendants of variable X.

Here, a variable sequence that is consistent with the order in terms of the causal relationship indicated by the causal graph 100 is called a causal order. Accordingly, the causal order is not unique for one causal graph 100. For example, in the causal graph 100, there are causal orders [U, W, Y, X, Z, V], [U, W, X, Z, V, Y], [U, W, X, Y, Z, V], and the like.

The information processing apparatus according to the embodiment estimates the above-mentioned causal graph 100 by using LiNGAM, based on the dataset to be estimated. More specifically, the information processing apparatus according to the embodiment estimates the causal graph 100 by using DirectLiNGAM, which has been widely used in LiNGAM estimation algorithm.

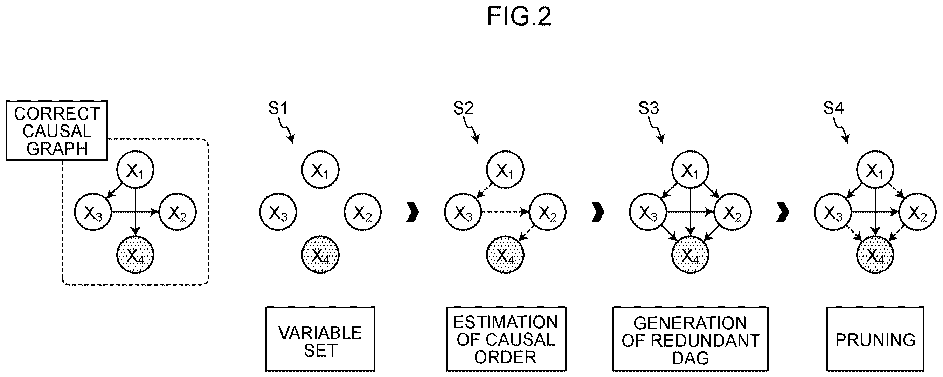

FIG. 2 is a diagram illustrating an example of causal graph estimation. As illustrated in FIG. 2, the dataset to be estimated includes a variable set of $X_1$, $X_2$, $X_3$, and $X_4$ (S1).

Assuming that a causal relationship between variables (= the generation process) is based on a linear equation (Equation (1)), the information processing apparatus according to the embodiment makes a model of the variable set. Then, the information processing apparatus according to the embodiment performs causal discovery for parameters of the model by using a dataset and thereby estimates causal orders among the variables (S2).

$$X_i = \sum_{X_j \in Pa_i} \alpha_{ij} X_j + \varepsilon_i \qquad \cdots (1)$$

where $X_i$ is a variable and variable $X_j$ is a parent variable of variable $X_i$. As illustrated in Equation (1), variable $X_i$ is generated by a linear sum of an unobserved noise $\varepsilon_i$ and a value obtained by multiplying parent variable $X_j$ included in the parent variable group $Pa_i$ by parameter $a_{ij}$. Here, parent variable $X_j$ and noise $\varepsilon_i$ are statistically independent.

The information processing apparatus according to the embodiment estimates a DAG structure (causal graph 100 and parameter $\alpha_{ij}$), based on the dataset. In the illustrated example, a causal order of $X_1 \rightarrow X_3 \rightarrow X_2 \rightarrow X_4$ is estimated.

Next, the information processing apparatus produces a redundant DAG structure that is consistent with the estimated causal order (S3). Specifically, by adding $X_1 \rightarrow X_2$, $X_1 \rightarrow X_4$ $X_3 \rightarrow X_4$ to the redundant DAG structure estimated at S2, the information processing apparatus according to the embodiment produces a redundant DAG structure.

Next, for the produced redundant DAG structure, the information processing apparatus according to the embodiment sequentially estimates coefficient matrices related to parameter $\alpha_{ij}$ from the upstream to the downstream side, based on the dataset, and performs pruning, based on the estimated coefficient matrices (S4).

In the illustrated example, pruning of the dotted arrow portions ($X_1 \rightarrow X_2$, $X_2 \rightarrow X_4$, $X_3 \rightarrow X_4$) is performed. Thus, the information processing apparatus according to the embodiment obtains a DAG structure ($X_1 \rightarrow X_3$, $X_1 \rightarrow X_4$, $X_3 \rightarrow X_2$ and the parameter).

Here, in the estimation sequentially performed from the upstream to the downstream side, processing to estimate an effect of a determined variable and then find the next variable from a variable set from which the estimated effect is removed is repeated. Hence, more errors tend to accumulate on the downstream side to make the reliability lower. Therefore, when the reliability of the entirety of the causal order is determined, the reliability is often lower and thereby unreliable.

The information processing apparatus according to the embodiment calculates the reliability of each inter-variable relationship between a variable as a cause and a variable as an effect for the estimated DAG structure.

Specifically, based on the dataset to be estimated (hereinafter referred to as "real dataset"), the information processing apparatus according to the embodiment uses an estimation result (DAG structure) indicating a causal relationship between variables included in the real dataset to generate a virtual dataset (hereinafter referred to as "virtual dataset") having the same causal relationship as the above-mentioned causal relationship. Next, the information processing apparatus according to the embodiment calculates the reliability of each inter-variable relationship between a variable as a cause and a variable as an effect, based on the difference between the real dataset and the virtual dataset.

Next, when displaying the estimated DAG structure to present the estimated DAG structure to the user, the information processing apparatus according to the embodiment also displays the reliability of each inter-variable relationship between a variable as a cause and a variable as an effect.

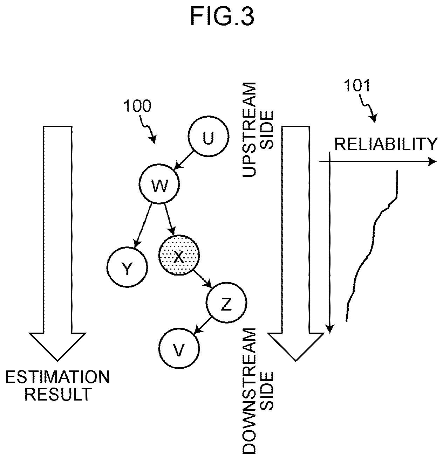

FIG. 3 is a diagram illustrating an example of presenting the reliability of an estimation result. As illustrated in FIG. 3, the information processing apparatus according to the embodiment performs causal discovery for variables (U, V, W, X, Y, Z) included in a dataset to obtain a causal graph 100 of $U \rightarrow W \rightarrow Y \rightarrow X \rightarrow Z \rightarrow V$.

The information processing apparatus according to the embodiment generates a virtual dataset by using the estimated DAG structure (the causal graph 100 of $U \rightarrow W \rightarrow Y \rightarrow X \rightarrow Z \rightarrow V$), based on a real dataset. Next, the information processing apparatus according to the embodiment calculates the reliability of relationships between variables as causes and variables as effects ($U \rightarrow W$, $W \rightarrow Y$, $W \rightarrow Y$, $X \rightarrow Z$, $Z \rightarrow V$), based on the difference between the real dataset and the virtual dataset.

The information processing apparatus according to the embodiment makes reliability display 101 regarding the calculated reliability of the relationships between the variables ($U \rightarrow W$, $W \rightarrow X$, $W \rightarrow Y$, $X \rightarrow Z$, $Z \rightarrow V$). For example, the information processing apparatus according to the embodiment makes reliability display 101 that graphs the reliability in order from cause (upstream side) to effect (downstream side).

By referring to this reliability display 101, the user can easily identify a reliable portion (between variables) in the estimated DAG structure. Thus, even when the entirety of the causal graph is unreliable, the user can easily identify portions of the causal graph on the upstream side (for example, $U \rightarrow W$, $W \rightarrow X$) that have reliability of a predetermined threshold or higher.

Embodiment

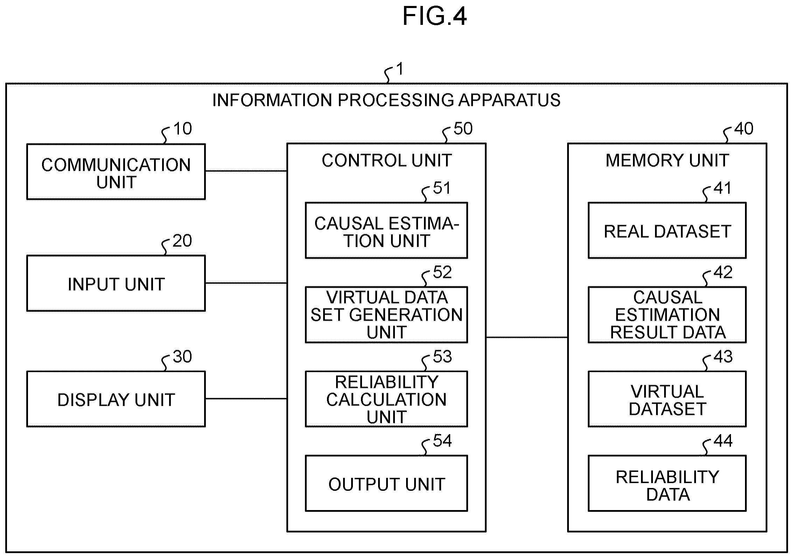

FIG. 4 is a block diagram illustrating a functional configuration example of the information processing apparatus according to the embodiment. As illustrated in FIG. 4, an information processing apparatus 1 includes a communication unit 10, an input unit 20, a display unit 30, a memory unit 40, and a control unit 50.

The communication unit 10 performs data communication with an external device and other devices via a network. The input unit 20 receives operations from the user. The display unit 30 displays the result of processing performed by the control unit 50.

The memory unit 40 stores various data, such as a real dataset 41, causal estimation result data 42, a virtual dataset 43, and reliability data 44. The memory unit 40 is realized by a memory, for example.

The real dataset 41 is a dataset to be estimated, the dataset being collected from an external device or other devices via the communication unit 10. The causal estimation result data 42 are the result of estimation of a causal graph estimated based on the real dataset 41, specifically data indicating a DAG structure (causal graph 100 and parameter $\alpha_{ij}$). The virtual dataset 43 is a virtual dataset generated using the estimated DAG structure, based on the real dataset 41. The reliability data 44 are data indicating the reliability of each inter-variable relationship, the reliability being generated based on the differences between the real dataset 41 and the virtual dataset 43.

The control unit 50 includes a causal estimation unit 51, a virtual dataset generation unit 52, a reliability calculation unit 53, and an output unit 54. The control unit 50 is realized by a processor, for example.

Based on the real dataset 41, the causal estimation unit 51 is a processing unit that estimates a DAG structure (causal graph 100 and parameter $\alpha_{ij}$) indicating a causal relationship (generation relationship) between variables included in the real dataset 41. Specifically, the causal estimation unit 51 estimates the DAG structure by using DirectLiNGAM, which has been widely used for LiNGAM estimation algorithm, as described above. The causal estimation unit 51 stores an estimation result and a causal order in the estimation as the causal estimation result data 42 in the memory unit 40.

The virtual dataset generation unit 52 is a processing unit that, based on the real dataset 41, generates the virtual dataset 43 having a causal relationship between variables included in the real dataset 41 in accordance with the causal estimation result data 42 indicating the causal relationship. The virtual dataset generation unit 52 stores the generated virtual dataset 43 in the memory unit 40.

Here, a case is illustrated in which the virtual dataset generation unit 52 generates the virtual dataset 43, based on the causal estimation result data 42 corresponding to the causal graph 100 as illustrated in FIG. 3. It is assumed that a causal order when this causal graph is estimated by DirectLiNGAM is $U{\rightarrow}W{\rightarrow}Y{\rightarrow}X{\rightarrow}Z{\rightarrow}V$.

First, the virtual dataset generation unit 52 estimates the distribution of the most upstream variable U. The top-level variable is expressed as $U = \varepsilon_U$ (having no parent variable). The virtual dataset generation unit 52 estimates noise distribution $p(\varepsilon_U)$ of variable U as noise distribution $p(\varepsilon_U) = p(U)$ by using kernel density estimation (KDE) or other means.

A child (variable W) of variable U is estimated as $W = \alpha_{WU}U + \varepsilon_W$, based on the above-mentioned Equation (1). Here, variables W and U are included in the real dataset 41, and $\alpha_{WU}$ is included in the estimated parameters of the DAG structure.

Therefore, based on the data of variables W and U included in the real dataset 41 and the estimated parameter $\alpha_{WU}$, the virtual dataset generation unit 52 estimates noise term $\varepsilon_W$ corresponding thereto. Next, the virtual dataset generation unit 52 estimates the noise distribution $p(\varepsilon_W)$ from the estimated noise term $\varepsilon_W$. Next, the virtual dataset generation unit 52 generates virtual data of W, based on $p(\varepsilon_W)$ and $p(U)$.

The virtual dataset generation unit 52 generates the virtual dataset 43 by repeating such virtual data generation in order from W to $Y{\rightarrow}X{\rightarrow}Z{\rightarrow}V$.

The reliability calculation unit 53 is a processing unit that calculates the reliability of each inter-variable relationship between a variable as a cause and a variable as an effect, based on the differences between the real dataset 41 and the virtual dataset 43.

Specifically, the reliability calculation unit 53 compares between the data distributions of variables included in the real dataset 41 and the causal estimation result data 42 and quantifies the difference therebetween to calculate reliability. Hereinafter, the above-described calculation of the reliability is referred to as evaluation in terms of difference in data distribution.

More specifically, to obtain the reliability of each relationship between a variable as a cause and a variable as an effect, the reliability calculation unit 53 compares the data distribution of variables as causes included in the real dataset 41 with the data distribution of variables as causes included in the causal estimation result data 42. Next, for example, by a two-group nonparametric test, the reliability calculation unit 53 quantifies the difference resulting from the comparison of the data distributions. Subsequently, the reliability calculation unit 53 calculates the reliability, based on the calculated difference. For example, the reliability calculation unit 53 calculates that reliability is smaller (lower) as the difference between the virtual dataset 43 and the real dataset 41 is larger, and conversely, the reliability calculation unit 53 calculates that reliability is larger (higher) as the difference between the virtual dataset 43 and the real dataset 41 is smaller.

Alternatively, to obtain the reliability of each inter-variable relationship between a variable as a cause and a variable as an effect, the reliability calculation unit 53 may calculate the reliability, based on an evaluation result of the amount of noise assumption violation in a model (LiNGAM) which is assumed to be based on the linear equation (Equation (1)). Hereinafter, the above-described reliability calculation is referred to as evaluation in terms of the amount of noise assumption violation.

Specifically, the reliability calculation unit 53 calculates reliability, based on the difference (the amount of noise assumption violation) between noise estimated in the case of generating a variable as an effect from a variable as a cause included in the virtual dataset 43 and assumed noise in an estimation result based on the real dataset 41. For example, the virtual dataset generation unit 52 calculates that reliability is higher as the amount of noise assumption violation is smaller, and conversely, the virtual dataset generation unit 52 calculates that reliability is lower as the amount of noise assumption violation is larger.

Alternatively, to obtain the reliability of each inter-variable relationship between a variable as a cause and a variable as an effect, the reliability calculation unit 53 may combine (add up or average) reliability calculated using the evaluation in terms of the difference between the data distributions and reliability calculated using the evaluation of the amount of noise assumption violation.

The output unit 54 is a processing unit that makes reliability display 101 regarding the reliability of each inter-variable relationship, the reliability being calculated by the reliability calculation unit 53. Specifically, the output unit 54 makes reliability display 101, for example, displaying, on the display unit 30, what is obtained by graphing reliability in order from cause (the upstream side) to effect (the downstream side).

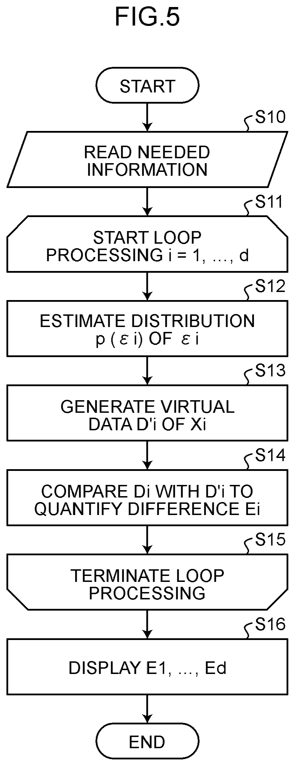

Next, processing to calculate reliability by evaluating the difference between the data distributions will be described in detail. FIG. 5 is a flowchart illustrating an operation example of the information processing apparatus according to the embodiment. Note that, as information needed for the processing, the real dataset 41 and the causal estimation result data 42 regarding the causal graph estimated using the real dataset 41 by the causal estimation unit 51 are stored in advance in the memory unit 40.

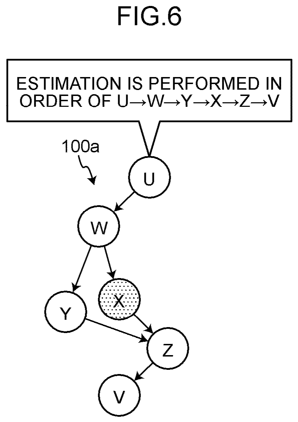

FIG. 6 is a diagram illustrating a causal graph example. Specifically, the causal estimation result data 42 regarding a causal graph 100a as illustrated in FIG. 6 are stored in advance in the memory unit 40.

As illustrated in FIG. 5, upon starting the processing, the control unit 50 reads information needed for the processing from the memory unit 40 (S10). Specifically, the control unit 50 reads data regarding variables included in the real dataset 41. For example, when d variables included in the real dataset 41 are $X_1, X_2, ..., X_d$ in causal order, the control unit 50 reads data of $X_1, ..., X_d$, that is, $D = \{D_1, ..., D_d\}$. Furthermore, the control unit 50 reads the parameter $\alpha_{ij}$ included in the causal estimation result data 42 and a DAG structure (a causal graph in the estimation).

Here, the equation of the cause and effect estimated for variable $X_i$ is expressed as the above-mentioned Equation (1). $Pa_i$ is a set of parent variables of variable $X_i$. When there is no parent variable (the most upstream variable U in the causal graph 100a), $Pa_i = $ (empty set), hence, $X_i = \varepsilon i$.

Next, the control unit 50 generates the virtual dataset 43 in order from the most upstream variable $X_i$ (i = 1, ..., d) and performs loop processing (S11-S15) to determine the difference between the data distribution of the real dataset 41 and the data distribution of the virtual dataset 43.

Upon starting the loop processing, the virtual dataset generation unit 52 estimates the distribution $p(\varepsilon_i)$ of noise term $\varepsilon_i$ (S12). Specifically, the virtual dataset generation unit 52 generates the data of $\varepsilon_i$ by using Equation (1) from the data of $X_i$, $\{X_j \mid j \in Pa_i\}$ included in the real dataset 41 and the estimated value of $\{\alpha_{ij} \mid j \in Pa_i\}$ included in the causal estimation result data 42. Next, the virtual dataset generation unit 52 estimates the distribution of $\varepsilon_i$ by using the generated $\varepsilon_i$, for example, by KDE.

Next, the virtual dataset generation unit 52 generates virtual data $D'_i$ of $X_i$, based on the estimated distribution $p(\varepsilon_i)$ and distribution $p(X_j)$ (S13). Here, the distribution $p(X_j)$ of the parent variable may be estimated based on the virtual data of $X_j$ already generated in the previous loop, or may be estimated using true data. The virtual dataset generation unit 52 generates samples from $p(\varepsilon_i)$ and $p(X_j)$ ($X_j$ is a parent variable group of $X_i$ and not used when $X_i$ is the most upstream variable) and generates virtual data of $X_i$ by using the samples and Equation (1).

Next, the reliability calculation unit 53 compares $D_i$ included in the real dataset 41 with the virtual data $D'_i$ to quantify the difference $E_i$ therebetween (S14). Specifically, the reliability calculation unit 53 compares the data distribution of $D_i$ and the data distribution of virtual data $D'_i$. Next, the reliability calculation unit 53 qualifies and determines the difference ($E_i$) resulting from the data distribution comparison, for example, by a two-group nonparametric test. The thus-determined $E_i$ corresponds to the reliability of a relationship between variable i and parent variable j.

Following the above-described loop processing, the output unit 54 displays the reliability ($E_1, ...,$ Ed) of each inter-variable relationship on the display unit 30 (S16), the reliability being calculated by the reliability calculation unit 53, and terminates the processing.

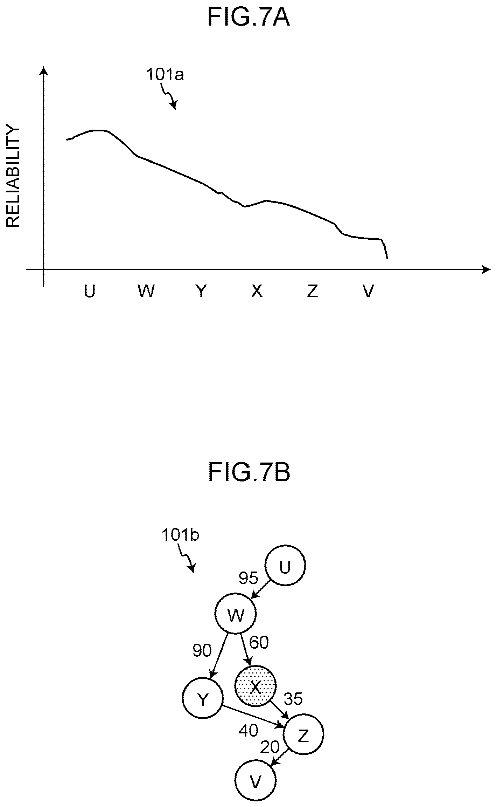

FIG. 7A and FIG. 7B are diagrams illustrating an examples of presenting reliability based on an estimation result. As illustrated in FIG. 7A, the output unit 54 may perform reliability display 101a obtained by graphing reliability in order from cause (the upstream side) to effect (the downstream side) (variables U→W→Y→X→Z→V). Thus, the user can easily identify an upstream portion of a causal graph (for example, U to Y) that has reliability not less than a predetermined threshold.

As illustrated in FIG. 7B, the output unit 54 may make reliability display 101b that indicates reliability on each edge between variables in an estimated causal graph. Thus, the user can easily identify a reliable portion (edge) in the estimated causal graph. For example, the user can easily identify variables U→W, W→Y, and W→X, each having reliability of 50 or higher.

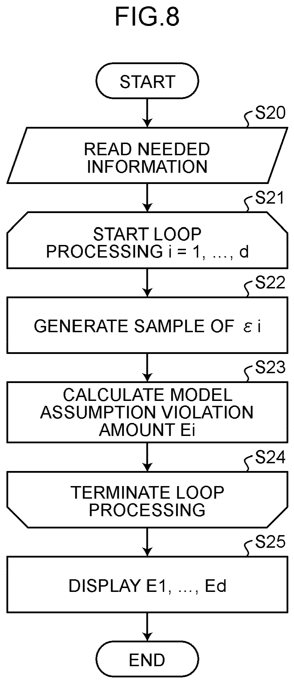

Next, processing to calculate reliability by evaluating the amount of noise assumption violation will be described in detail. FIG. 8 is a flowchart illustrating an operation example of the information processing apparatus according to the embodiment. As in the processing in FIG. 5, the real dataset 41 and the causal estimation result data 42 regarding the causal graph 100a of variables U→W→Y→X→Z→V are stored in the memory unit 40 in advance as information needed for the processing.

As illustrated in FIG. 8, upon starting the processing, the control unit 50 reads information needed for the processing from the memory unit 40 (S20). Next, the control unit 50 performs loop processing (S21-S24) to generate virtual datasets 43 in order from the most upstream variable $X_i$ (i=1, ..., d) and evaluate the amount of noise assumption violation. Note that the loop processing can be performed independently for each i and therefore performed in any order and in parallel.

Upon starting the loop processing, the virtual dataset generation unit 52 generates a sample of $\varepsilon_i$ (S22). Specifically, the virtual dataset generation unit 52 generates data of $\varepsilon_i$ by using Equation (1) from data of $X_i$, $\{X_j \mid j \in Pa_i\}$ included in the real dataset 41 and an estimated value of $\{\alpha_{ij} \mid j \in Pa_i\}$ included in the causal estimation result data 42.

Next, the reliability calculation unit 53 calculates the amount of model assumption violation ($E_i$) (S23). Specifically, the reliability calculation unit 53 quantifies the amount of model assumption violation (for example, HSIC value) by an independence test, from samples of the generated $\varepsilon_i$ and the parent variable $X_j$ ($j \in Pa_j$). Note that, for the most upstream variable (variable U having no parent variable), the amount of model assumption violation does not need to be calculated. The thusobtained $E_i$ corresponds to the reliability of the relationship between variable i and parent variable j.

Following the above-described loop processing, the output unit 54 displays the reliability ($E_1, ...,$ Ed) of relationships between variables that is calculated by the reliability calculation unit 53 on the display unit 30 (S25) and terminates the processing.

As described above, based on a first dataset (the real dataset 41), the information processing apparatus 1 generates a virtual second dataset (the virtual dataset 43) having a causal relationship based on an estimation result (the causal estimation result data 42) indicating a causal relationship between variables included in the first dataset. Based on the differences between the first dataset and the second dataset, the information processing apparatus 1 calculates the reliability of relationships between the first variables as causes in the causal relationship and the second variables as effects in the causal relationship. The information processing apparatus 1 displays the calculated reliability of each relationship between variables.

Thus, the user can easily identify a reliable portion (between variables) and can more accurately evaluate the result of estimation performed by causal discovery.

Furthermore, the information processing apparatus 1 calculates the reliability of a relationship between the first variable and the second variable in the causal relationship, based on the difference between the data distribution of the second variable included in the first dataset and the data distribution of the second variable included in the second dataset. By determining the reliability based on the difference between the data distributions as described above, the information processing apparatus 1 can more accurately statistically calculate the reliability of a relationship between the variables.

Furthermore, the information processing apparatus 1 calculates the reliability of a relationship between the first variable and the second variable in the causal relationship, based on the difference between noise estimated in the case of generating the second variable from the first variable included in the second dataset and assumed noise in an estimation result. Thus, the information processing apparatus 1 may determine reliability by using a difference (the degree of violation) when noise is assumed to be statistically independent. In this case, the information processing apparatus 1, for example, does not need the estimation of noise distribution, which is generally expensive arithmetic processing. Furthermore, the information processing apparatus 1 can treat relationships between variables separately.

In addition, the information processing apparatus 1 displays the reliability of each relationship between variables in order from the cause to the effect. Thus, the information processing apparatus 1 can easily identify a reliable portion on the upstream side.

The constituents of the devices illustrated in the drawings do not have to be physically configured as illustrated in the drawings. That is, specific forms of distribution and integration of the devices are not limited to those illustrated in the drawings. All or some of the devices can be configured to be functionally or physically distributed or integrated in any unit in accordance with various loads, usage states, and the like.

Moreover, all or some of processing functions of the causal estimation unit 51, the virtual dataset generation unit 52, the reliability calculation unit 53, and the output unit 54, the processing functions being performed by the control unit 50 of the information processing apparatus 1, may be implemented on a CPU (or a microcomputer such as an MPU or a micro controller unit (MCU)). It goes without saying that all or some of the processing functions may be implemented on a computer program to be analyzed and executed by a CPU (or a microcomputer such as an MPU or an MCU) or on hardware using wired logic. Alternatively, the processing functions implemented by the information processing apparatus 1 may be executed by a plurality of computers working together through cloud computing.

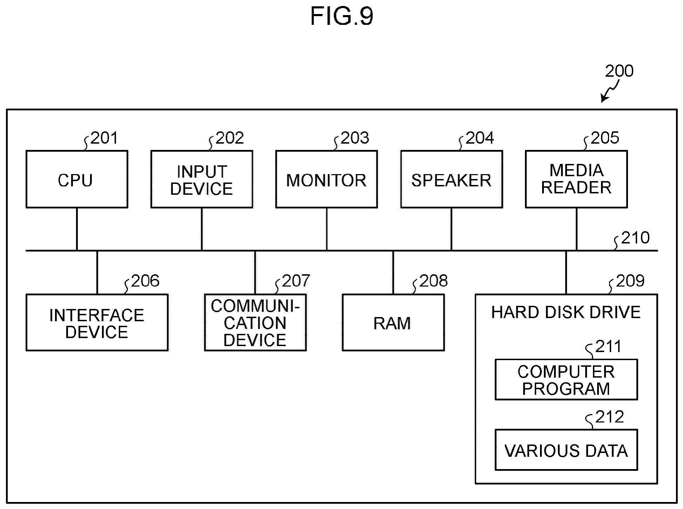

The various types of processing described in the embodiment above can be realized by executing a preprepared computer program on a computer. Then, an example of a computer configuration (hardware) that executes a computer program with the same function as that in the embodiment above will be described below. FIG. 9 is a diagram illustrating the example of the computer configuration.

As illustrated in FIG. 9, a computer 200 includes: a CPU 201 that executes various arithmetic operations; an input device 202 that receives data input; a monitor 203; and a speaker 204. The computer 200 further includes: a media reader 205 that reads a computer program and other data from a storage medium; an interface device 206 that connects to various devices; and a communication device 207 that makes communication connection to an external device by wired or wireless means. The computer 200 further includes: a RAM 208 that temporarily store various types of information; and a hard disk drive 209. Units (201-209) of the computer 200 are connected to a bus 210.

The hard disk drive 209 stores a computer program 211 to execute various types of processing in the functional constituents (for example, the causal estimation unit 51, the virtual dataset generation unit 52, the reliability calculation unit 53, and the output unit 54) described in the embodiment above. The hard disk drive 209 further stores various data 212 that the computer program 211 refers to. The input device 202, for example, receives an input of operation information from the operator. The monitor 203 displays various screens operated by the operator, for example. The interface device 206 is connected to a printer, for example. The communication device 207 is connected to a communication network such as local area network (LAN) and exchanges various information with an external device via the communication network.

The CPU 201 reads the computer program 211 stored in the hard disk drive 209 and expands the computer program 211 in RAM 208 to perform various types of processing related to the above-described functional constituents (for example, the causal estimation unit 51, the virtual dataset generation unit 52, the reliability calculation unit 53, and the output unit 54). Note that the computer program 211 does not have to be stored in the hard disk drive 209. For example, the computer 200 may read and execute the computer program 211 stored on a storage medium readable by the computer 200. Examples of the storage medium readable by the computer 200 include CD-ROMs, DVD disks, portable storage media such as universal serial bus (USB) memory, semiconductor memory such as flash memory, and hard disk drives. The computer program 211 may be stored in a device connected to a public line, the Internet, or a LAN, and the computer 200 may read the computer program 211 from the device and execute the computer program 211.

According to the embodiment, the result of causal discovery can be more accurately evaluated.

**Claims**

1. A display program that causes a computer (1) to execute a process comprising:

   based on a first dataset, generating (S13) a second dataset that is virtual and has a causal relationship between variables included in the first dataset, in accordance with an estimation result indicating the causal relationship; calculating (S14) reliability of each inter-variable relationship between a first variable serving as a cause in the causal relationship and a second variable serving as an effect in the causal relationship, based on difference between the first dataset and the second dataset; and displaying (S16) the calculated reliability of each inter-variable relationship.

2. The display program according to claim 1, wherein the calculating (S14) includes calculating reliability of a relationship between the first variable and the second variable in the causal relationship, based on difference between data distribution of the second variable included in the first dataset and data distribution of the second variable included in the second dataset.

3. The display program according to claim 1 or 2, wherein the calculating (S14) includes calculating the reliability of the relationship between the first variable and the second variable in the causal relationship, based on difference between noise estimated when the second variable is generated from the first variable included in the second dataset and noise assumed in the estimation result.

4. The display program according to any one of claims 1 to 3, wherein the displaying (S16) includes displaying the reliability of each inter-variable relationship in order from the cause to the effect.

5. A display method carried out by a computer (1), comprising:

   based on a first dataset, generating (S13) a second dataset that is virtual and has a causal relationship between variables included in the first dataset, in accordance with an estimation result indicating the causal relationship; calculating (S14) reliability of each inter-variable relationship between a first variable serving as a cause in the causal relationship and a second variable serving as an effect in the causal relationship, based on difference between the first dataset and the second dataset; and displaying (S16) the calculated reliability of each inter-variable relationship.

6. The display method according to claim 5, wherein the calculating (S14) includes calculating reliability of a relationship between the first variable and the second variable in the causal relationship, based on difference between data distribution of the second variable included in the first dataset and data distribution of the second variable included in the second dataset.

7. The display method according to claim 5 or 6, wherein the calculating (S14) includes calculating the reliability of the relationship between the first variable and the second variable in the causal relationship, based on difference between noise estimated when the second variable is generated from the first variable included in the second dataset and noise assumed in the estimation result.

8. The display method according to any one of claims 5 to **7,** wherein the displaying (S16) includes displaying the reliability of each inter-variable relationship in order from the cause to the effect.

9. An information processing apparatus (1) comprising a control unit (50) configured to execute a process comprising:

   based on a first dataset, generating (S13) a second dataset that is virtual and has a causal relationship between variables included in the first dataset, in accordance with an estimation result indicating the causal relationship; calculating (S14) reliability of each inter-variable relationship between a first variable serving as a cause in the causal relationship and a second variable serving as an effect in the causal relationship, based on difference between the first dataset and the second dataset; and

displaying (S16) the calculated reliability of each inter-variable relationship.

10. The information processing apparatus (1) according to claim 9, wherein the calculating (S14) includes calculating reliability of a relationship between the first variable and the second variable in the causal relationship, based on difference between data distribution of the second variable included in the first dataset and data distribution of the second variable included in the second dataset.

11. The information processing apparatus (1) according to claim 9 or 10, wherein the calculating (S14) includes calculating the reliability of the relationship between the first variable and the second variable in the causal relationship, based on difference between noise estimated when the second variable is generated from the first variable included in the second dataset and noise assumed in the estimation result.

12. The information processing apparatus (1) according to any one of claims 9 to 11, wherein the displaying (S16) includes displaying the reliability of each inter-variable relationship in order from the cause to the effect.

# FIG.1

# FIG.2

EP 4 734 005 A1

# FIG.3

# FIG.4

## INFORMATION PROCESSING APPARATUS — 1

### COMMUNICATION UNIT — 10

### INPUT UNIT — 20

### DISPLAY UNIT — 30

### CONTROL UNIT — 50

- CAUSAL ESTIMATION UNIT — 51
- VIRTUAL DATA SET GENERATION UNIT — 52
- RELIABILITY CALCULATION UNIT — 53
- OUTPUT UNIT — 54

### MEMORY UNIT — 40

- REAL DATASET — 41
- CAUSAL ESTIMATION RESULT DATA — 42
- VIRTUAL DATASET — 43
- RELIABILITY DATA — 44

# FIG.5

```
        ( START )
            │
            ▼                    ⌐S10
   READ NEEDED
   INFORMATION
            │
            ▼                    ⌐S11
   START LOOP
   PROCESSING i = 1, ..., d
            │
            ▼                    ⌐S12
   ESTIMATE DISTRIBUTION
   p ( ε i) OF  ε i
            │
            ▼                    ⌐S13
   GENERATE VIRTUAL
   DATA D'i OF Xi
            │
            ▼                    ⌐S14
   COMPARE Di WITH D'i TO
   QUANTIFY DIFFERENCE Ei
            │
            ▼                    ⌐S15
   TERMINATE LOOP
   PROCESSING
            │
            ▼                    ⌐S16
   DISPLAY E1, ..., Ed
            │
            ▼
         ( END )
```

# FIG.6

ESTIMATION IS PERFORMED IN ORDER OF U→W→Y→X→Z→V

100a

# FIG.7A

# FIG.7B

# FIG.8

START

S20
READ NEEDED
INFORMATION

S21
START LOOP
PROCESSING i = 1, ..., d

S22
GENERATE SAMPLE OF $\varepsilon i$

S23
CALCULATE MODEL
ASSUMPTION VIOLATION
AMOUNT Ei

S24
TERMINATE LOOP
PROCESSING

S25
DISPLAY E1, ..., Ed

END

## FIG.9

200

201 CPU

202 INPUT DEVICE

203 MONITOR

204 SPEAKER

205 MEDIA READER

210

206 INTERFACE DEVICE

207 COMMUNI-CATION DEVICE

208 RAM

209 HARD DISK DRIVE

211 COMPUTER PROGRAM

212 VARIOUS DATA

Europäisches
Patentamt

European
Patent Office

Office européen
des brevets

## EUROPEAN SEARCH REPORT

**Application Number**

EP 25 21 0937

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. ZUO ET AL: "Interventional fairness on partially known causal graphs: a constrained optimization approach", ARXIV.ORG, CORNELL UNIVERSITY LIBRARY, 201 OLIN LIBRARY CORNELL UNIVERSITY ITHACA, NY 14853, 8 March 2024 (2024-03-08), XP091692510, DOI: 10.48550/arXiv.2401.10632 * sections 2-4 * | 1-12 | INV. G06N5/01 |
| X | M. CHEVALLEY ET AL: "Deriving causal order from single-variable interventions: guarantees & algorithm", ARXIV.ORG, CORNELL UNIVERSITY LIBRARY, 201 OLIN LIBRARY CORNELL UNIVERSITY ITHACA, NY 14853, 10 October 2024 (2024-10-10), XP091899567, DOI: 10.48550/arXiv.2405.18314 * sections 3-8 * | 1-12 | |
| A | D. GARANT, D. JENSEN: "Evaluating causal models by comparing interventional distributions", ARXIV.ORG, CORNELL UNIVERSITY LIBRARY, 201 OLIN LIBRARY CORNELL UNIVERSITY ITHACA, NY 14853, 16 August 2016 (2016-08-16), XP080720282, DOI: 10.48550/arXiv.1608.04698 * sections 2 and 4 * | 1-12 | **TECHNICAL FIELDS SEARCHED (IPC)** G06N |

-/--

The present search report has been drawn up for all claims

| Place of search | Date of completion of the search | Examiner |
|---|---|---|
| The Hague | 27 February 2026 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 21 0937

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | B. HUANG ET AL: "Causal discovery from heterogeneous/nonstationary data with independent changes", ARXIV.ORG, CORNELL UNIVERSITY LIBRARY, 201 OLIN LIBRARY CORNELL UNIVERSITY ITHACA, NY 14853, 25 June 2020 (2020-06-25), XP081678687, DOI: 10.48550/arXiv.1903.01672 * sections 2 and 4 * | 1-12 | |
| A | J. M. MOOIJ ET AL: "Joint causal inference from multiple contexts", ARXIV.ORG, CORNELL UNIVERSITY LIBRARY, 201 OLIN LIBRARY CORNELL UNIVERSITY ITHACA, NY 14853, 20 August 2020 (2020-08-20), XP081743630, DOI: 10.48550/arXiv.1611.10351 * sections 2.2, 3 and 4 * | 1-12 | |
| A | W. NIU ET AL: "Comprehensive review and empirical evaluation of causal discovery algorithms for numerical data", ARXIV.ORG, CORNELL UNIVERSITY LIBRARY, 201 OLIN LIBRARY CORNELL UNIVERSITY ITHACA, NY 14853, 4 September 2024 (2024-09-04), XP091871825, DOI: 10.48550/arXiv.2407.13054 * figure 5 * | 1-12 | **TECHNICAL FIELDS SEARCHED (IPC)** |

The present search report has been drawn up for all claims

| Place of search | Date of completion of the search | Examiner |
|---|---|---|
| The Hague | 27 February 2026 | Douarche, Nicolas |

**REFERENCES CITED IN THE DESCRIPTION**

**Patent documents cited in the description**

- JP 2016190619 A